# EUROPEAN PATENT SPECIFICATION

(11) **EP 2 031 369 B1**
(45) Date of publication and mention of the grant of the patent: **29.08.2018**
(21) Application number: 08161262.4
(22) Date of filing: 28.07.2008
(51) Int. Cl.: G01Q 20/04, G01Q 30/06, G01B 21/04

(54) **Method and apparatus for detecting measurement position of resonance sensor**
Verfahren und Vorrichtung zur Erkennung der Messposition eines Resonanzsensors
Procédé et appareil de détection de la position de mesure d'un capteur de résonance

(30) Priority: 01.08.2007 JP 2007201162
(43) Date of publication of application: 04.03.2009
(73) Proprietor: Mitutoyo Corporation, Kawasaki, Kanagawa 213-8533 (JP)
(72) Inventor: Goto, Tomonori, Hokkaido 060-0807 (JP)
(74) Representative: Gill Jennings & Every LLP

(56) References cited:
- EP-A2- 1 382 934
- WO-A-2006/073068
- JP-A- 2000 028 511
- US-A1- 2004 055 170

## Description

The present invention relates to a method and apparatus for detecting a measurement position of a resonance sensor using the resonance characteristics. More specifically, the present invention relates to a method and apparatus for detecting a measurement position of a resonance sensor which are preferably used in a measuring apparatus to which a resonance sensor can be attached, such as a form measuring apparatus, a three-dimensional measuring apparatus, or an image measuring apparatus. The resonance sensor of the present invention detects a contact between the tip end of a measuring element and a measurement object by resonant-vibrating the measuring element in the longitudinal direction by vibrating means, obtaining an output signal depending on resonance of the measuring element by detecting means, and capturing a change in the output signal.

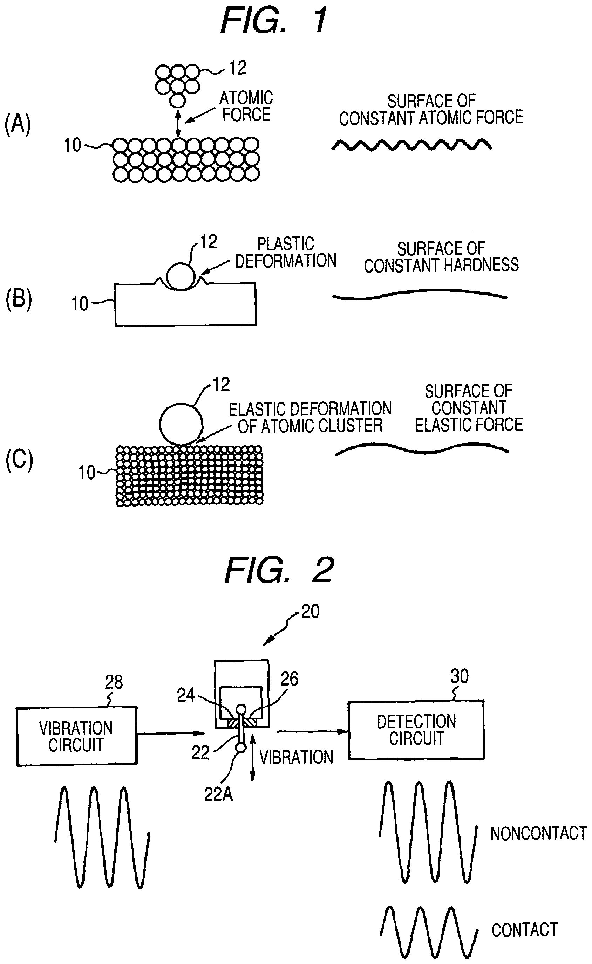

Fig. 1 shows a technique which is conventionally employed in a surface texture measurement that uses a stylus, and that is performed at the nano-level.

Fig. 1(A) shows an atomic force microscope (AFM) in which a probe 12 is moved on a measurement object 10, a fine change in the atomic force that is caused by asperity of the measurement object 10, and that is applied to the probe 12 is read, thereby visualizing the asperity of the measurement object 10. According to the AFM, asperity of the atomic level can be observed, and the object to be measured is a surface in which the atomic force is constant.

By contrast, in a classical surface texture measuring technique using, for example, a roughness meter shown in Fig. 1(B), a measuring force at a level of mN is applied, and hence scratches remain in the surface of the measurement object 10. This corresponds to a measurement which is performed on a face of a constant hardness.

As described above, the physical quantity to be measured is varied depending on the sensing technique.

In a resonance sensor (see Patent Reference 1) which is being developed, and which uses resonance characteristics, as shown in Fig. 1(C), interaction between the measurement object 10 and the probe 12 is captured as a change in resonance characteristics. In the resonance sensor, the tip end of the probe 12 has a diameter on the order of µm, and hence the measurement is enabled without damaging the surface of the measurement object 10. Therefore, it is considered that the measurement is performed on a local face where the elastic force is constant.

The resonance sensor which was proposed in Patent Reference 1 by the assignee of the present application has a structure where, as shown in Fig. 2, two piezoelectric elements 24, 26 respectively for vibration and detection are pasted to a measuring element (referred to as stylus) 22 in which a diamond tip, a ruby sphere, or the like having a diameter on the order of µm is attached to the tip end 22A. The vibration piezoelectric element 24 of the resonance sensor 20 is driven by a vibration circuit 28 to resonantly vibrate the stylus 22 in the longitudinal direction (the vertical direction in the figure), and then an output signal depending on the resonance of the stylus 22 is obtained from the detection piezoelectric element 26. When the tip end 22A of the stylus 22 in the resonance state is contacted with the measurement object, resonance characteristics (frequency, phase, and amplitude) are changed according to the indentation amount, and the amplitude, frequency, and phase of the output signal (also referred to as the detection signal) of the detection piezoelectric element 26 are changed. A detection circuit 30 detects the change in the output signal, so that the contact between the tip end 22A of the stylus and the measurement object can be sensed. When a scale and sensor which are used for reading the coordinate position of the tip end 22A of the stylus at the timing when the contact is sensed, or a scanning mechanism for the measurement object is provided, it is possible to perform the surface texture measurement.

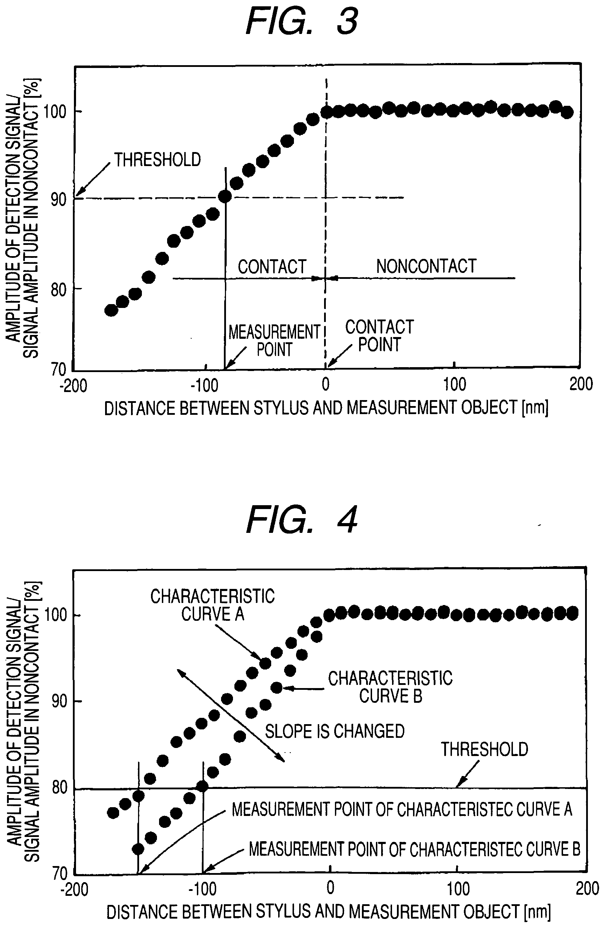

As described above, when the tip end of the stylus 22 is contacted with the measurement object, the amplitude, frequency, and phase of the output signal of the detection piezoelectric element 26 are changed. For the sake of simplicity, hereinafter, the description will be made by using the change in the amplitude of the detection signal. At the instant when the stylus 22 is contacted with the measurement object, energy dissipation is caused by the interaction, and the amplitude of the resonance signal is reduced. When the stylus is further pushed in, the amplitude of the detection signal shows the characteristic curve with respect to the distance between the stylus and the measurement object in which, as exemplified in Fig. 3, the signal amplitude gradually decreases in proportion to the indentation amount after the position (contact point) where the stylus 22 begins to contact the surface of the measurement object 10. Therefore, a threshold (90% in the illustrated example) is set in the signal amplitude, a trigger signal is generated at the timing when the signal amplitude crosses the threshold, and the coordinate position of the tip end 22A of the stylus at that timing is read as a measurement point, so that the system can be used as a touch-trigger sensor to measure the coordinate.

[Patent Reference 1] Japanese Patent Application Publication No. 2002-393737
[Patent Reference 2] Japanese Patent Application Publication No. Hei. 10-111143
[Patent Reference 3] Japanese Patent Application Publication No. Hei. 6-3140

However, the stylus 22 has a thin plate-like shape, and the resonance sensor 20 is not a sensor which is isotropic with respect to the elastic force produced by the measurement object 10. Therefore, the characteristic curve is changed by the direction dependency. Furthermore, it is considered that, in the range where the surface of the measurement object is not damaged, the characteristic curve is based on the elastic interaction between the stylus and the surface of the measurement object. Therefore, the characteristic curve is changed also by the materials of the tip end 22A of the stylus and the resonance sensor 20, and the production lots of the piezoelectric elements 24, 26 used in the resonance sensor 20. Moreover, the characteristic curve is affected also by the environment in which the resonance sensor 20 is placed, such as the temperature and the humidity. As exemplified in Fig. 4, these influences appear as a difference in the slope of the characteristic curve. Therefore, the sensor has a problem in that, when the trigger sampling based on a threshold (80% in the illustrated example) is performed, a large measurement error is produced depending on the difference in the slope of the characteristic curve in sampling.

On the other hand, Patent Reference 2 discloses a configuration where, in production of a trigger signal at a steep amplitude change point from a DC sensor signal which is obtained by detecting and extracting amplitude information from a sinusoidal output signal of a touch signal probe, and on which a low-frequency waviness component and a high-frequency noise component are superimposed, a reference signal is produced from a signal having only a low-frequency waviness component, the reference signal is compared with the DC sensor signal, and an abrupt DC level transition of the DC sensor signal is accurately sensed. Patent Reference 3 discloses a configuration where a measurement position is estimated from correlation with respect to a preregistered pattern. Even when these configurations are used as they are in a resonance sensor, however, a sufficient effect cannot be achieved.

JP2000-028511 and WO2006/073068 each disclose atomic force microscopes having a cantilevered measurement probe.

EP 1 382 934 A2 discloses a resonance sensor comprising a measuring stylus having a tip end.

The invention has been conducted in order to solve the above-discussed conventional problem. It is an object of the invention to reduce influences which cause an error in a resonance sensor to enable an accurate measurement to be performed, thereby improving the ease of use and the reliability.

In the invention, the problem is solved by a method of detecting a measurement position of a resonance sensor, the resonance sensor comprising a measurement stylus having a tip end, vibrating means adapted to resonant-vibrate the measurement stylus along its longitudinal direction and detecting means adapted to detect the resonance of the measurement stylus and output a corresponding output signal, wherein contact between the tip end of the measuring stylus and a measurement object is sensed by resonant-vibrating the measuring stylus along its longitudinal direction, and capturing a change in the output signal from the detecting means, comprising steps of:
obtaining a characteristic curve showing a relationship between a distance between the measuring stylus and the measurement object, and a ratio of the amplitude of the output signal relative to the amplitude of the output signal when the measurement stylus is not in contact with the measurement object, at a measurement point of the measurement object, and
estimating a change start position of the output signal corresponding to a contact start position of the tip end of the measuring element with respect to the measurement object from the characteristic curve, and detecting the estimated change start position as a measurement position,
wherein, in a measurement by scanning, the change start position of the output signal is estimated based on data of an amplitude of the output signal of a noncontact region which are previously obtained, and data of a slope of the characteristic curve of a contact region which are obtained in the measurement by scanning.

In the invention, similarly, the problem is solved by an apparatus for detecting a measurement position of a resonance sensor,
the resonance sensor comprising a measurement stylus having a tip end, vibrating means adapted to resonant-vibrate the measurement stylus along its longitudinal direction and detecting means adapted to detect the resonance of the measurement stylus and output a corresponding output signal, whereby contact between the tip end of the measuring stylus and a measurement object is sensed by resonant-vibrating the measurement element in a longitudinal direction, and capturing a change in the output signal from the detecting means, the apparatus comprising:
characteristic curve obtaining means adapted to obtain a characteristic curve showing a relationship between a distance between the measuring stylus and the measurement object, and a ratio of the amplitude of the output signal relative to the amplitude of the output signal when the measurement stylus is not in contact with the measurement object, at a measurement point of the measurement object; and
change start position estimating means adapted to estimate a change start position of the output signal corresponding to a contact start position of the tip end of the measuring element with respect to the measurement object from the characteristic curve, and to detect the estimated change start position as a measurement position,
wherein, in a measurement by scanning, the change start position of the output signal is estimated based on data of an amplitude of the output signal of a noncontact region which are previously obtained, and data of a slope of the characteristic curve of a contact region which are obtained in the measurement by scanning.

According to the invention, when estimation of a change start position of the output signal, that is, the measurement position is performed, influences due to the material of the measurement object, the individual variability and direction dependency of the sensor, and the measurement environment are reduced, and a more accurate measurement is enabled. At the same time, a calibration measurement and correction process which are conducted for correcting the influences causing an error, and which are cumbersome are not necessary. Therefore, the burden on the measurer can be remarkably reduced, and a reliable measurement is enabled.

Examples of methods and apparatus in accordance with the present invention will now be described with reference to the accompanying drawings, in which:
Fig. 1 is a view comparingly showing principles of surface measurements using a stylus.
Fig. 2 is a view showing the measurement principle of a resonance sensor.
Fig. 3 is a view illustrating an example of a characteristic curve showing a relationship between a distance between a stylus and a measurement object, and an output signal.
Fig. 4 is a view showing an example of a change of the characteristic curve.
Fig. 5 is a view showing a characteristic curve in a first embodiment of the invention.
Fig. 6 is a view showing a characteristic curve in a second embodiment of the invention.
Fig. 7 is a view showing an apparatus for detecting a measurement position of the resonance sensor of the invention.

### Description of Reference Numerals and Signs

10 ... measurement object
20 ... resonance sensor
22 ... measuring element (stylus)
22A ... tip end of measuring element
24 ... vibration piezoelectric element
26 ... detection piezoelectric element
28 ... vibration circuit
30 ... detection circuit

Hereinafter, embodiments of the invention will be described in detail with reference to the drawings. The same reference numbers are applied to the same components as the conventional device in Fig. 2, and its detailed explanation will be omitted.

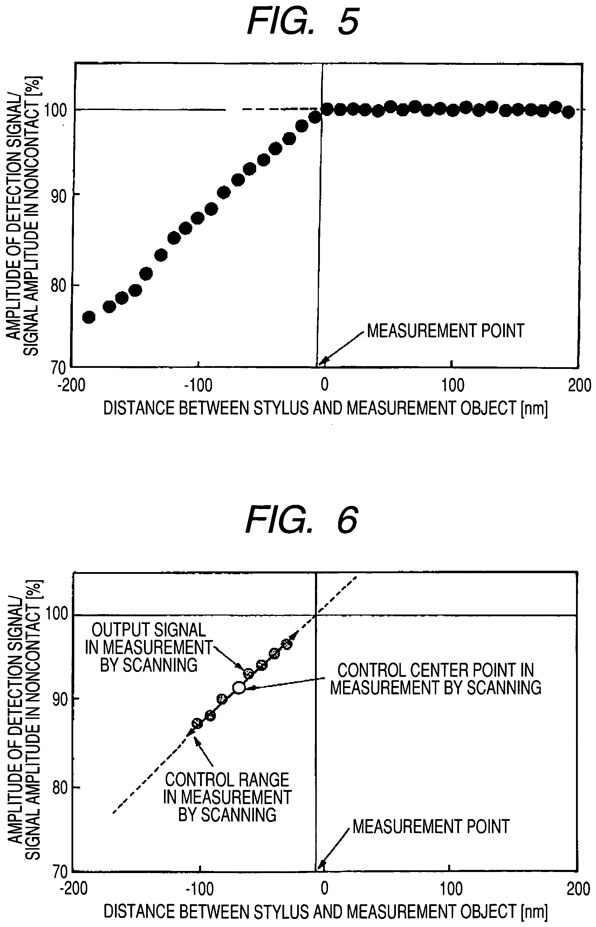

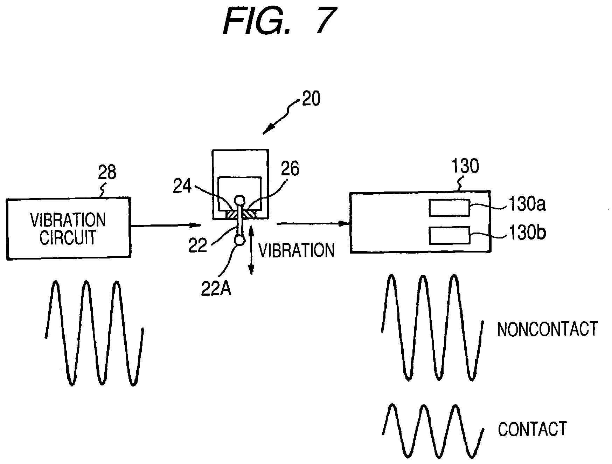

In a comparative example, the method and apparatus for detecting the measurement position of the resonance sensor according to the invention is applied to a touch measurement in which a contact between the tip end of the measuring element and the measurement object is sensed. In the method and apparatus for detecting the measurement position of the resonance sensor according to the comparative example, the conventional trigger sampling based on a threshold is not performed. Characteristic curves are observed at respective measurement points of the measurement object, and an attenuation start position of the signal amplitude corresponding to the contact start position of the tip end of a measuring element of the resonance sensor with respect to the measurement object is estimated from the obtained characteristic curves. As shown in Fig. 7, a resonance sensor 20 of the first embodiment of the invention has a measuring element 22 with the tip end 22A, and two piezoelectric elements 24, 26 respectively for vibration and detection. The vibration piezoelectric element 24 of the resonance sensor 20 is driven by a vibration circuit 28, and an output signal depending on the resonance of the stylus 22 is obtained from the detection piezoelectric element 26. A detection circuit 130 has characteristic curve obtaining means 130a which obtains a characteristic curve showing a relationship between a distance between the measuring element and the measurement object, and a change state of the output signal, at the respective measurement points of the measurement object, and change start position estimating means 130b which estimates a change start position of the output signal corresponding to a contact start position of the tip end of the measuring element with respect to the measurement object from the characteristic curve, and detects the estimated change start position as a measurement position. As shown in Fig. 5, for example, the detection circuit 130 can estimate a regression line from each of data of the noncontact region and those of the contact region, and sets an intersection of the two obtained lines as the contact start position.

According to the technique, independent from the difference of the slopes of the characteristic curves, the contact start position can be estimated and set as a measurement position.

Next, an embodiment of the invention in which the invention is applied to a measurement by scanning will be described in detail.

In the measurement by scanning, as shown in Fig. 6, a control is performed so as to follow the surface of the measurement object while setting a certain point (control center point) on the slope of a characteristic curve as a center. Therefore, the output signal of a detection piezoelectric element repeats rising and falling while centered at the control center point on the characteristic curve. When the amplitude of the rising and falling movements is observed, therefore, it is possible to know the slope of the characteristic curve. On the other hand, the amplitude in noncontact is known prior to the start of the measurement by scanning. Therefore, the attenuation start position of the signal amplitude can be estimated from the obtained slope data and the amplitude in noncontact.

In the embodiments described above, the characteristic curve with respect to the amplitude of the output signal is used. The kind of the characteristic curve is not restricted to this, and the frequency or phase of the output signal may be used. The vibrating means and the detecting means are not restricted to piezoelectric elements.

## Claims

1. A method of detecting a measurement position of a resonance sensor (20), the resonance sensor comprising a measurement stylus (22) having a tip end (22a), vibrating means adapted to resonant-vibrate the measurement stylus along its longitudinal direction and detecting means adapted to detect the resonance of the measurement stylus (22) and output a corresponding output signal, wherein contact between the tip end of the measuring stylus and a measurement object is sensed by resonant-vibrating the measuring stylus along its longitudinal direction, and capturing a change in the output signal from the detecting means, comprising steps of:
obtaining a characteristic curve showing a relationship between a distance between the measuring stylus and the measurement object, and a ratio of the amplitude of the output signal relative to the amplitude of the output signal when the measurement stylus (22) is not in contact with the measurement object, at a measurement point of the measurement object, and
estimating a change start position of the output signal corresponding to a contact start position of the tip end of the measuring element with respect to the measurement object from the characteristic curve, and detecting the estimated change start position as a measurement position,
wherein, in a measurement by scanning, the change start position of the output signal is estimated based on data of an amplitude of the output signal of a noncontact region which are previously obtained, and data of a slope of the characteristic curve of a contact region which are obtained in the measurement by scanning.

2. An apparatus for detecting a measurement position of a resonance sensor, the resonance sensor comprising a measurement stylus (22) having a tip end (22a), vibrating means adapted to resonant-vibrate the measurement stylus along its longitudinal direction and detecting means adapted to detect the resonance of the measurement stylus (22) and output a corresponding output signal, whereby contact between the tip end of the measuring stylus and a measurement object is sensed by resonant-vibrating the measuring element in a longitudinal direction, and capturing a change in the output signal from the detecting means, the apparatus comprising:
characteristic curve obtaining means adapted to obtain a characteristic curve showing a relationship between a distance between the measuring stylus and the measurement object, and a ratio of the amplitude of the output signal relative to the amplitude of the output signal when the measurement stylus (22) is not in contact with the measurement object, at a measurement point of the measurement object; and
change start position estimating means adapted to estimate a change start position of the output signal corresponding to a contact start position of the tip end of the measuring element with respect to the measurement object from the characteristic curve, and to detect the estimated change start position as a measurement position,
wherein, in a measurement by scanning, the change start position of the output signal is estimated based on data of an amplitude of the output signal of a noncontact region which are previously obtained, and data of a slope of the characteristic curve of a contact region which are obtained in the measurement by scanning.

## Patentansprüche

1. Verfahren zum Ermitteln einer Messposition eines Resonanzsensors (20), wobei der Resonanzsensor einen Messungstaststift (22) umfasst, der ein Spitzenende (22a) aufweist, ein Vibrationsmittel, das dazu eingerichtet ist, den Messungstaststift entlang seiner Längsrichtung in Resonanzschwingungen zu versetzen, und ein Ermittlungsmittel, das dazu eingerichtet ist, die Resonanz des Messungstaststifts (22) zu ermitteln und ein entsprechendes Ausgangssignal auszugeben, wobei ein Kontakt zwischen dem Spitzenende des Messungstaststifts und einem Messobjekt erfasst wird, indem der Messungstaststift entlang seiner Längsrichtung in Resonanzschwingungen versetzt wird, und zum Erfassen einer Änderung des Ausgangssignals von dem Ermittlungsmittel, umfassend folgende Schritte:
Erhalten einer Kennlinie, die eine Beziehung zwischen einer Distanz zwischen dem Messungstaststift und dem Messobjekt anzeigt, und einem Verhältnis der Amplitude des Ausgangssignals relativ zu der Amplitude des Ausgangssignals, wenn sich der Messungstaststift (22) nicht in Kontakt mit dem Messobjekt befindet, an einem Messpunkt des Messobjekts, und
Schätzen einer Änderungsstartposition des Ausgangssignals entsprechend einer Kontaktstartposition des Spitzenendes des Messungselements bezüglich des Messobjekts anhand der Kennlinie, und Ermitteln der geschätzten Änderungsstartposition als eine Messposition,
wobei in der Messung durch Abtasten die Änderungsstartposition des Ausgangssignals basierend auf Daten einer Amplitude des Ausgangssignals eines kontaktfreien Bereichs, die vorab erhalten werden, und Daten einer Steigung der Kennlinie eines Kontaktbereichs geschätzt wird, die vorab in der Messung durch Abtasten erhalten werden.

2. Vorrichtung zum Ermitteln einer Messposition eines Resonanzsensors, wobei der Resonanzsensor einen Messungstaststift (22) umfasst, der ein Spitzenende (22a) aufweist, ein Vibrationsmittel, das dazu eingerichtet ist, den Messungstaststift entlang seiner Längsrichtung in Resonanzschwingungen zu versetzen, und ein Ermittlungsmittel, das dazu eingerichtet ist, die Resonanz des Messungstaststifts (22) zu ermitteln und ein entsprechendes Ausgangssignal auszugeben, wobei ein Kontakt zwischen dem Spitzenende des Messungstaststifts und einem Messobjekt erfasst wird, indem das Messungselement entlang seiner Längsrichtung in Resonanzschwingungen versetzt wird, und zum Erfassen einer Änderung des Ausgangssignals von dem Ermittlungsmittel, wobei die Vorrichtung umfasst:
ein Mittel zum Erhalten einer Kennlinie, das dazu eingerichtet ist, eine Kennlinie zu erhalten, die eine Beziehung zwischen einer Distanz zwischen dem Messungstaststift und dem Messobjekt anzeigt, und einem Verhältnis der Amplitude des Ausgangssignals relativ zu der Amplitude des Ausgangssignals, wenn sich der Messungstaststift (22) nicht in Kontakt mit dem Messobjekt befindet, an einem Messpunkt des Messobjekts, und
ein Mittel zum Schätzen einer Änderungsstartposition, das dazu eingerichtet ist, eine Änderungsstartposition des Ausgangssignals entsprechend einer Kontaktstartposition des Spitzenendes des Messungselements bezüglich des Messobjekts anhand der Kennlinie zu schätzen, und die geschätzte Änderungsstartposition als eine Messposition zu ermitteln,
wobei in der Messung durch Abtasten die Änderungsstartposition des Ausgangssignals basierend auf Daten einer Amplitude des Ausgangssignals eines kontaktfreien Bereichs, die vorab erhalten werden, und Daten einer Steigung der Kennlinie eines Kontaktbereichs geschätzt wird, die vorab in der Messung durch Abtasten erhalten werden.

## Revendications

1. Procédé de détection d'une position de mesure d'un capteur de résonance (20), le capteur de résonance comprenant un stylet de mesure (22) ayant une extrémité de pointe (22a), un moyen de vibration adapté pour faire vibrer par résonance le stylet de mesure le long de sa direction longitudinale, et un moyen de détection adapté pour détecter la résonance du stylet de mesure (22) et pour fournir un signal de sortie correspondant, dans lequel le contact entre l'extrémité de pointe du stylet de mesure et un objet à mesurer est détecté en faisant vibrer par résonance le stylet de mesure le long de sa direction longitudinale, et en capturant un changement du signal de sortie qui provient du moyen de détection, comprenant les étapes consistant à :
obtenir une courbe caractéristique qui indique une relation entre une distance entre le stylet de mesure et l'objet à mesurer, et un rapport entre l'amplitude du signal de sortie et l'amplitude du signal de sortie lorsque le stylet de mesure (22) n'est pas en contact avec l'objet à mesurer, à un point de mesure de l'objet à mesurer, et
estimer une position de début de changement du signal de sortie correspondant à une position de début de contact de l'extrémité de pointe de l'élément à mesurer par rapport à l'objet à mesurer à partir de la courbe caractéristique, et détecter la position de début de changement estimée comme position de mesure,
dans lequel, lors d'une mesure par balayage, la position de début de changement du signal de sortie est estimée sur la base des données d'une amplitude du signal de sortie d'une zone de non-contact qui sont obtenues au préalable, et des données d'une pente de la courbe caractéristique d'une zone de contact qui sont obtenues pendant la mesure par balayage.

2. Appareil de détection d'une position de mesure d'un capteur de résonance, le capteur de résonance comprenant un stylet de mesure (22) ayant une extrémité de pointe (22a), un moyen de vibration adapté pour faire vibrer par résonance le stylet de mesure le long de sa direction longitudinale, et un moyen de détection adapté pour détecter la résonance du stylet de mesure (22) et pour fournir un signal de sortie correspondant, moyennant quoi le contact entre l'extrémité de pointe du stylet de mesure et un objet à mesurer est détecté en faisant vibrer par résonance l'élément à mesurer dans une direction longitudinale, et en capturant le signal de sortie qui provient du moyen de détection, l'appareil comprenant :
un moyen d'obtention de courbe caractéristique adapté pour obtenir une courbe caractéristique qui indique une relation entre une distance entre le stylet de mesure et l'objet à mesurer, et un rapport entre l'amplitude du signal de sortie et l'amplitude du signal de sortie lorsque le stylet de mesure (22) n'est pas en contact avec l'objet à mesurer, à un point de mesure de l'objet à mesurer ; et
un moyen d'estimation de position de début de changement adapté pour estimer une position de début de changement du signal de sortie correspondant à une position de début de contact de l'extrémité de pointe de l'élément de mesure par rapport à l'objet à mesurer à partir de la courbe caractéristique, et pour détecter la position de début de changement estimée comme une position de mesure,
dans lequel, pendant une mesure par balayage, la position de début de changement du signal de sortie est estimée sur la base des données d'une amplitude du signal de sortie d'une zone de non-contact qui sont préalablement obtenues, et des données d'une pente de la courbe caractéristique d'une zone de contact qui sont obtenues pendant la mesure par balayage.
